# EUROPEAN PATENT APPLICATION

(11) **EP 4 095 989 A1**
(43) Date of publication of application: **30.11.2022**
(21) Application number: 20925128.9
(22) Date of filing: 19.03.2020
(51) Int. Cl.: H01M 50/10, H01M 50/183

(54) **ENCAPSULATION STRUCTURE OF BATTERY CELL**

(71) Applicant: Ningde Amperex Technology Ltd., Ningde City, Fujian 352100 (CN)
(72) Inventor: YANG, Hongzhan, Ningde, Fujian 350900 (CN)
(74) Representative: Icosa
(86) International application number: PCT/CN2020/080279
(87) International publication number: WO 2021/184319

(57) **Abstract**

A packaging structure of a battery cell is disclosed, including a sealant and a packaging bag. The packaging bag includes an accommodation space and a seal edge configured to seal the accommodation space. A direction in which the tab extends from the accommodation space out of the packaging bag is defined as a first direction. In the first direction, the tab includes a first region, a second region, and a third region that are connected to each other in sequence. The first region is electrically connected to the electrode assembly in the accommodation space. The third region is exposed out of the packaging bag. The sealant surrounds the second region. The second region is disposed in the seal edge. The seal edge includes a first surface and a second surface that are disposed opposite to each other. A protruding portion is disposed on the first surface at a position corresponding to the sealant. The second surface is a flat surface. The first surface includes a first seal region and a non-seal region that are connected in sequence along the first direction. The second surface includes a second seal region. In the first direction, a width of the first seal region is n, and a width of the second seal region is m, where n < m. The packaging structure of the battery cell helps to improve reliability of the battery cell.

## Description

### TECHNICAL FIELD

This application relates to the field of batteries, and in particular, to a packaging structure of a battery cell.

### BACKGROUND

Batteries are widely used in everyday life due to advantages such as a high specific energy, a high working voltage, a low self-discharge rate, a small size, and a light weight. A battery cell currently available in the market is typically sealed by hot-pressing heat seal heads at both sides, so that a sealing film, a tab, and another sealing film are pressed together to implement sealing. On the seal heads at both sides, grooves are made at positions corresponding to the tab to accommodate surplus overflow adhesive. However, after the battery cell in the prior art is packaged, a conspicuous protruding part exists on a sealing surface of the battery cell, and occupies some space in a thickness direction, thereby being adverse to subsequent mounting of a protection circuit module of the battery cell, especially an ultra-thin battery cell. In addition, bumpiness of a seal exerts an adverse effect on the fixation of the battery cell to be placed into a device, thereby impairing reliability of the battery cell.

### SUMMARY

In view of the foregoing, it is necessary to provide a battery to solve the foregoing problems.

A packaging structure of a battery cell includes an electrode assembly, a tab electrically connected to the electrode assembly, a sealant, and a packaging bag. The packaging bag forms an accommodation space configured to accommodate the electrode assembly. The packaging bag includes a seal edge configured to seal the accommodation space. A direction in which the tab extends from the accommodation space out of the packaging bag is defined as a first direction. In the first direction, the tab includes a first region, a second region, and a third region that are connected to each other in sequence. The first region is electrically connected to the electrode assembly. The third region is exposed out of the packaging bag. The sealant surrounds the second region. The second region is disposed in the seal edge. The seal edge includes a first surface and a second surface that are disposed opposite to each other. A protruding portion is disposed on the first surface. The protruding portion is disposed at a position corresponding to the sealant. The second surface is a flat surface. The first surface includes a first seal region and a non-seal region that are connected in sequence along the first direction. The second surface includes a second seal region. In the first direction, a width of the first seal region is n, and a width of the second seal region is m, where n < m.

In the packaging structure of a battery cell according to this application, the protruding portion is disposed on the first surface, and the width n of the first seal region is less than the width m of the second seal region, thereby ensuring both reliability of the packaging and flatness of the second surface of the seal edge after sealing, and in turn, facilitating subsequent mounting of a protection circuit module.

### BRIEF DESCRIPTION OF DRAWINGS

FIG. 1 is a schematic structural diagram of a packaging structure of a battery cell according to an embodiment of this application;
FIG. 2 is a schematic sectional view of a packaging structure of a battery cell sectioned along a II-II direction according to an embodiment of this application;
FIG. 3 is a schematic sectional view of a packaging structure of a battery cell sectioned along a III-III direction according to an embodiment of this application;
FIG. 4 is a schematic sectional view of a packaging structure of a battery cell sectioned along a IV-IV direction according to an embodiment of this application; and
FIG. 5 is a schematic sectional view of packaging a battery cell with seal heads according to an embodiment of this application.

**Reference numerals of main components:**

| | |
|---|---|
| Packaging structure of battery cell | 100 |
| Electrode assembly | 10 |
| Tab | 20 |
| Sealant | 30 |
| Packaging bag | 40 |
| Accommodation space | 41 |
| Seal edge | 43 |
| First direction | X |
| First region | 21 |
| Second region | 23 |
| Third region | 25 |
| First surface | 431 |
| Second surface | 433 |
| Protruding portion | 430 |
| First seal region | 434 |
| Non-seal region | 435 |
| Second seal region | 436 |
| Second direction | Y |
| First sealing film | 401 |
| Second sealing film | 403 |
| First resin layer | 403a |
| First metal layer | 401b |
| Second resin layer | 401c |
| Third resin layer | 403a |
| Second metal layer | 403b |
| Fourth resin layer | 403c |
| First seal head | 51 |
| Second seal head | 53 |

This application is further described below with reference to the following specific embodiments and the foregoing drawings.

### DETAILED DESCRIPTION OF EMBODIMENTS

The following describes the technical solutions in the embodiments of this application clearly and thoroughly with reference to the drawings herein. Evidently, the described embodiments are merely a part of but not all of the embodiments of this application. All other embodiments derived by a person of ordinary skill in the art based on the embodiments of the present invention without making any creative effort fall within the protection scope of the present invention.

Unless otherwise defined, all technical and scientific terms used herein have the same meanings as usually understood by a person skilled in the technical field of this application. The terms used in the specification of this application herein are merely intended for describing specific embodiments but are not intended to limit this application.

The following describes some embodiments of this application in detail with reference to drawings. To the extent that no conflict occurs, the following embodiments and the features in the embodiments may be combined with each other.

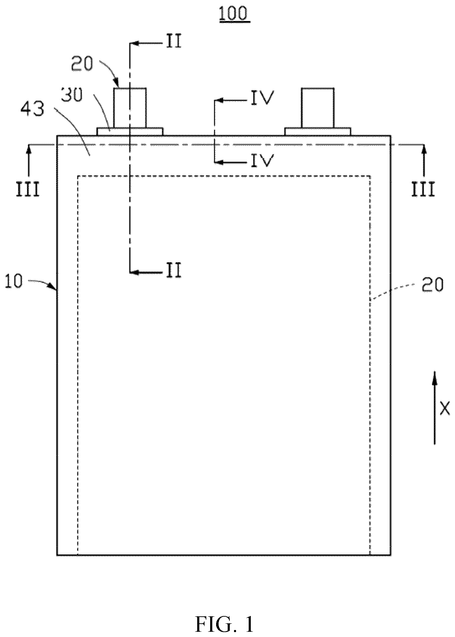

Referring to FIG. 1 to FIG. 4, a packaging structure 100 of a battery cell includes an electrode assembly 10, a tab 20, a sealant 30, and a packaging bag 40. The tab 20 is electrically connected to the electrode assembly 10. The packaging bag 40 includes an accommodation space 41 and a seal edge 43 configured to seal the accommodation space 41. The electrode assembly 10 is accommodated in the accommodation space 41. A direction in which the tab 20 extends from the accommodation space 41 out of the packaging bag 40 is defined as a first direction X. Along the first direction X, the tab 20 includes a first region 21, a second region 23, and a third region 25 that are connected to each other in sequence. At an end facing back from the second region 23, the first region 21 is electrically connected to the electrode assembly 10. The third region 25 is exposed out of the packaging bag 40. The second region 23 is disposed in the seal edge 43. The sealant 30 surrounds the second region 23 to bond the second region 23 and the seal edge 43.

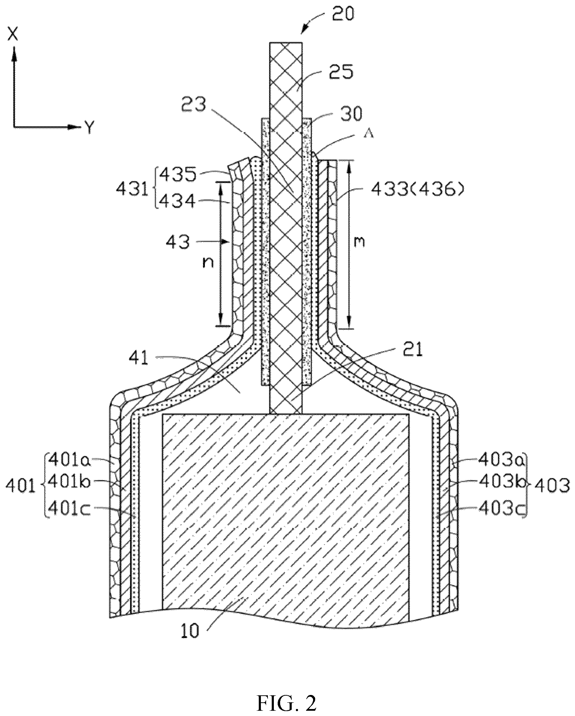

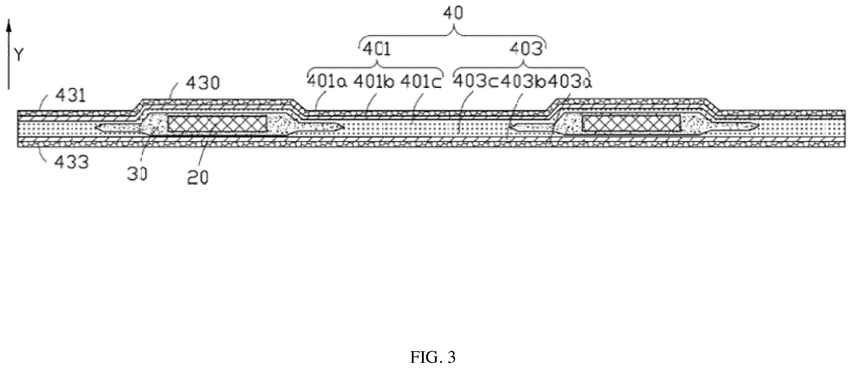

Referring to FIG. 2, the seal edge 43 includes a first surface 431 and a second surface 433 that are opposite to each other. Also referring to FIG. 3, corresponding to the sealant 30, a protruding portion 430 is disposed on the first surface 431. Referring to FIG. 2, the first surface 431 includes a first seal region 434 and a non-seal region 435 that are connected in sequence along the first direction X. In the first direction X, a width of the first seal region 434 is n.

In some embodiments, the width n of the first seal region 434 may be 0.5 mm to 10 mm.

In the first direction X, a width of the sealant 30 may be greater than the width n of the first seal region 434. In this embodiment, in the first direction X, the width of the sealant 30 is greater than a sum of the width of the first seal region 434 and the width of the non-seal region 435.

The second surface 433 is a flat surface, and includes a second seal region 436. In the first direction X, a width of the second seal region 436 is m, where n < m.

In this embodiment, an orthographic projection of the first seal region 434 on the second surface 433 fully falls into the second seal region 436. Further, an orthographic projection of the non-seal region 435 on the second surface may also fully fall into the second seal region 436.

In some embodiments, m and n further satisfy the following relation: 0 mm < m - n ≤ 2 mm.

A second direction Y is defined, and the second direction Y is perpendicular to the second surface 433. A thickness of the packaging structure 100 of a battery cell in the second direction Y is T, where m, n, and T may further satisfy the following relation: 0.2T < n < m < 0.8T.

In the first direction X, the width of the sealant 30 may be greater than the width m of the second seal region 436.

In some embodiments, along the first direction X, a width by which the sealant 30 is exposed out of the packaging bag 40 from the seal edge 43 is greater than or equal to 0.1 mm. Further, along the first direction X, the width by which the sealant 30 is exposed out of the packaging bag 40 from the seal edge 43 is 0.1 mm to 3 mm.

The packaging bag 40 includes a first sealing film 401 and a second sealing film 403 disposed opposite to the first sealing film 401. The first sealing film 401 and the second sealing film 403 work together to implement sealing and form the accommodation space 41 and the seal edge 43.

In some embodiments, the first sealing film 401 may include a first resin layer 401a, a first metal layer 401b, and a second resin layer 401c that are stacked in sequence. A surface belonging to the first resin layer 401a and facing back from the first metal layer 401b is an outer surface of the packaging bag 40 and is exposed outside. A region corresponding to the protruding portion 430 and located in the corresponding second resin layer 401c of the seal edge 43 is bonded to the sealant 30. A region located in the first sealing film 401 and corresponding to the protruding portion 430 protrudes toward a side back from the tab 20 along the second direction Y, so as to accommodate the sealant 30. A remaining region in the corresponding second resin layer 401c of the seal edge 43 is bonded to the second sealing film 403 in the seal edge 43.

The first resin layer 401a may be selected from, but without being limited to, a nylon film layer, a polyethylene terephthalate film layer, or a combination thereof. The second resin layer 401c may be selected from, but without being limited to, a random polypropylene film layer, a tape-cast polypropylene resin film layer, or a combination thereof.

In some embodiments, a spacing between the first metal layer 401b and any position on the tab 20 is greater than 15 µm.

The first metal layer 401b may be selected from, but without being limited to, an aluminum foil, a stainless steel sheet, or a combination thereof.

The sealant 30 includes at least one adhesive layer. A melting point of an adhesive layer bonded to the second resin layer 401c is MP₁, and a melting point of the second resin layer is MP₂, where |MP₁ - MP₂| ≤ 30 °C. In some embodiments, 0 °C < MP₂ - MP₁ ≤ 20 °C.

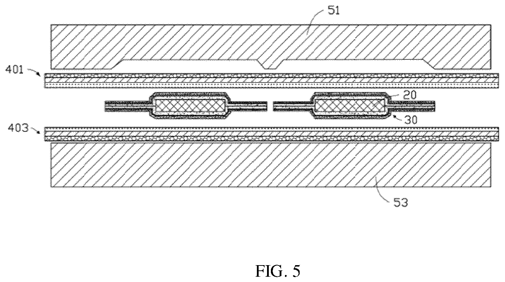

In this embodiment, as shown in FIG. 3, the sealant 30 is constructed of one adhesive layer. When the sealant 30 includes at least two adhesive layers, materials of any two adhesive layers may be the same or different. As shown in FIG. 5, the sealant 30 includes three adhesive layers. The three adhesive layers are stacked in sequence.

The sealant 30 may be selected from, but without being limited to, at least one of a polypropylene film layer or a polyethylene film layer.

In this embodiment, the second sealing film 403 may include a third resin layer 403a, a second metal layer 403b, and a fourth resin layer 403c that are stacked in sequence. A surface belonging to the third resin layer 403a and facing back from the second metal layer 403b is an outer surface of the packaging bag 40 and is exposed outside. A region corresponding to the sealant 30 and located in the corresponding fourth resin layer 403c of the seal edge 43 is bonded to the sealant 30. A remaining region in the corresponding fourth resin layer 403c of the seal edge 43 is bonded to the corresponding second resin layer 401c in the seal edge 43.

In the sealant 30, a melting point of an adhesive layer bonded to the fourth resin layer 403c is MP₃, and a melting point of the fourth resin layer 403c is MP₄, where |MP₃ - MP₄| ≤ 30 °C. Preferably, 0 < MP₄ - MP₃ ≤ 20 °C.

The third resin layer 403a may be selected from, but without being limited to, a nylon film layer, a polyethylene terephthalate film layer, or a combination thereof. The fourth resin layer 403c may be selected from, but without being limited to, a random polypropylene film layer, a tape-cast polypropylene resin film layer, or a combination thereof.

In some embodiments, a spacing between the second metal layer 403b and any position on the tab 20 is greater than 15 µm.

The second metal layer 403b may be selected from, but without being limited to, an aluminum foil, a stainless steel sheet, or a combination thereof.

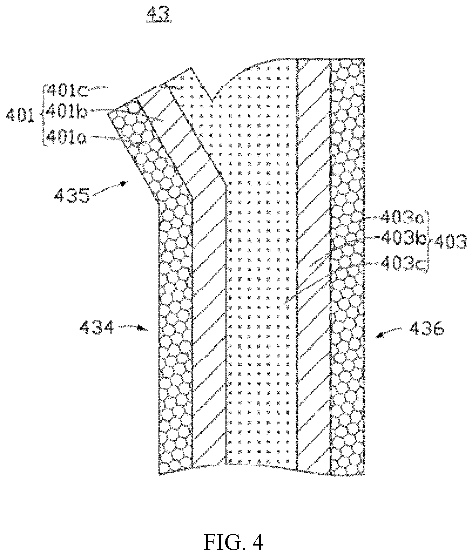

When the seal edge 43 is formed in a sealing process, the second resin layer 401c overflows toward the non-seal region 435, so that a region located in the first sealing film 401 and corresponding to the non-seal region 435 sticks up away from the tab 20 (as shown in FIG. 2 and FIG. 4). When the seal edge 43 is impressed, the fourth resin layer 403c overflows out of the packaging bag 40 from the seal edge 43 to form an adhesive overflow portion A (as shown in FIG. 2).

In some embodiments, as shown in FIG. 5, a region that includes the tab 20 and that is located between the first sealing film 401 and the second sealing film 403 is sealed by using the first seal head 51 and the second seal head 53. A groove corresponding to the sealant 30 is made on a surface of the first seal head 51 that acts on the first sealing film 401, where the surface is oriented toward the first sealing film 401. A surface of the second seal head 53 that acts on the second sealing film 403 is a flat plane, where the surface is oriented toward the second sealing film 403. In this way, a region located on the seal edge 43 and corresponding to the sealant 30 protrudes toward just one side after sealing. In addition, in the first direction X, the width of the first seal head 51 is less than the width of the second seal head 53.

In the packaging structure 100 of a battery cell according to this application, the protruding portion 430 is disposed on the first surface 431. The width n of the first seal region 434 is less than the width m of the second seal region 436, thereby ensuring both reliability of the packaging and flatness of the second surface 433 of the seal edge 43 after sealing, and in turn, facilitating subsequent mounting of a protection circuit module.

Various modifications and variations may be made by a person of ordinary skill in the art based on the technical conception hereof, and all such modifications and variations fall within the protection scope of this application.

## Claims

1. A packaging structure of a battery cell, comprising: an electrode assembly, a tab electrically connected to the electrode assembly, a sealant, and a packaging bag; wherein the packaging bag forms an accommodation space configured to accommodate the electrode assembly, the packaging bag comprises a seal edge configured to seal the accommodation space, a direction in which the tab extending from the accommodation space out of the packaging bag is defined as a first direction; and in the first direction, the tab comprises a first region, a second region, and a third region connected to each other in sequence, the first region is electrically connected to the electrode assembly, the third region is exposed out of the packaging bag, the sealant surrounds the second region, and the second region is disposed in the seal edge;
**characterized in that**, the seal edge comprises a first surface and a second surface disposed opposite to each other; a protruding portion is disposed on the first surface, the protruding portion is disposed at a position corresponding to the sealant, the second surface is a flat surface; the first surface comprises a first seal region and a non-seal region connected in sequence along the first direction, and the second surface comprises a second seal region; and in the first direction, a width of the first seal region is n, and a width of the second seal region is m, wherein n < m.

2. The packaging structure of a battery cell according to claim 1, **characterized in that** m and n further satisfy the following relation: 0 mm < m - n ≤ 2 mm.

3. The packaging structure of a battery cell according to claim 1, **characterized in that**, a thickness direction of the battery cell is defined as a second direction, the second direction is perpendicular to the first direction, a thickness of the battery cell in the second direction is T, and n, m, and T further satisfy the following relation: 0.2T < n < m < 0.8T.

4. The packaging structure of a battery cell according to claim 1, **characterized in that**, in the first direction, the width n of the first seal region is 0.5 mm to 10 mm.

5. The packaging structure of a battery cell according to claim 1, **characterized in that**, in the first direction, a width of the sealant is greater than the width of the first seal region.

6. The packaging structure of a battery cell according to claim 5, **characterized in that**, along the first direction, a width of the sealant outside the seal edge is greater than or equal to 0.1 mm.

7. The packaging structure of a battery cell according to claim 1, **characterized in that** the packaging bag comprises a first sealing film and a second sealing film disposed opposite to the first sealing film, and the first sealing film and the second sealing film work together to implement sealing and form the accommodation space and the seal edge; the first sealing film comprises a first resin layer, a first metal layer, and a second resin layer stacked in sequence, and the second resin layer is bonded to the sealant; and a distance between the first metal layer and any position on the tab is greater than 15 µm.

8. The packaging structure of a battery cell according to claim 7, **characterized in that**, the sealant comprises at least one adhesive layer, a melting point of an adhesive layer bonded to the second resin layer is MP₁, and a melting point of the second resin layer is MP₂, wherein 0 °C ≤ |MP₁ - MP₂| ≤ 30 °C.

9. The packaging structure of a battery cell according to claim 8, **characterized in that**, 0 °C < MP₂ - MP₁ ≤ 20 °C.

10. The packaging structure of a battery cell according to claim 8, **characterized in that**, the first resin layer is selected from a nylon film layer, a polyethylene terephthalate film layer, or a combination thereof; the first metal layer is selected from an aluminum foil, a stainless steel sheet, or a combination thereof; the second resin layer is selected from a random polypropylene film layer, a tape-cast polypropylene resin film layer, or a combination thereof; and the adhesive layer is selected from a polypropylene film layer, a polyethylene film layer, or a combination thereof.
